# EUROPEAN PATENT APPLICATION

(11) **EP 2 445 226 A2**
(43) Date of publication of application: **25.04.2012**
(21) Application number: 11170498.7
(22) Date of filing: 20.06.2011
(51) Int. Cl.: H04N 21/422

(54) **Electronic apparatus and control method thereof, and external apparatus and control method thereof**

(30) Priority: 19.10.2010 KR 20100101620
(71) Applicant: SAMSUNG ELECTRONICS CO., LTD., Suwon-si Gyeonggi-do 442-742 (KR)
(72) Inventor: Choi, Jun-hae, Gyeonggi-do (KR); Cho, Jung-yon, Gyeonggi-do (KR)
(74) Representative: Fearnside, Andrew Simon

(57) **Abstract**

An electronic apparatus and a control method thereof, and an external apparatus and a control method thereof. The electronic apparatus includes a communication unit which communicates with an external apparatus, and a controller which performs an operation corresponding to a key signal received through the communication unit, receives a setup signal through the communication unit to reset up an operation corresponding to a first key signal, and performs a second operation based on a result of the reset up when the first key signal is received through the communication unit. The setup signal sets up the first operation corresponding to the first key signal to be replaced by the second operation different from the first operation.

## Description

### BACKGROUND

### 1. Field

Apparatuses consistent with the exemplary embodiments relate to an electronic apparatus connected to enable intercommunication and a control method thereof, and an external apparatus and a control method thereof, and more particularly, to an electronic apparatus having a structure to control operations by manipulation of a user and a control method thereof, and an external apparatus and a control method thereof.

### 2. Description of the Related Art

A related art electronic apparatus is connected to communicate with various external apparatuses based on a preset protocol to establish a network system. An example of the related art network system is a home network system of various electrical home appliances. In the home network system, electronic devices forming the system organically operate overall through functional grouping or functional connection in view of efficiency in a user's purchase or performance of processes. An example of the home network system includes a display system to display an image.

The related art display system may be constituted, for example, by an image processing apparatus to process and output an image signal based on a preset process and a display apparatus to display the output image signal as an image. The display system is widely applied to various areas, for example, at home, a set-top box to receive an image signal as a broadcasting signal and a television (TV) connected to the set-top box to display a broadcasting image are used.

The set-top box and the TV have individual functions, respectively. Generally, a user selects control operations of the set-top box and the TV through a remote controller of the TV. However, all interfaces to select functions provided by the set-top box may not be included in the remote controller of TV. Thus, when an interface to select a function provided by the set-top box is not realized by the remote controller of the TV, the user selects and operates the function through a remote controller provided for the set-top box.

### SUMMARY

One or more exemplary embodiments provide an electronic apparatus and a control method thereof, and an external apparatus and a control method thereof.

According to the present invention there is provided an apparatus and method as set forth in the appended claims. Other features of the invention will be apparent from the dependent claims, and the description which follows.

According to an exemplary embodiment, an electronic apparatus is provided that includes a communication unit which communicates with an external apparatus, and a controller which performs a preset operation corresponding to a preset key signal received through the communication unit, receives a setup signal through the communication unit to reset up a first operation corresponding to a first key signal, and performs a second operation based on a result of the reset up when the first key signal is received through the communication unit, the setup signal setting up the first operation corresponding to the first key signal to be replaced by the second operation different from the first operation.

The electronic apparatus may further include a signal output unit which outputs a user interface (UI) image to be displayed in the external apparatus, and the controller may output the UI image including information indicating a setup change with respect to the first key signal through the signal output unit based on a result of the reset up.

The controller may generate the UI image by replacing a first object corresponding to the first operation by a second object corresponding to the second operation.

The setup signal may include address information where an image of the second object is stored, and the controller may receive the image of the second object stored in the address information from a server connected via a network.

The controller may change a setup of mapping with respect to the first key signal to the second operation based on the setup signal, the preset operation corresponding to each key signal being mapped.

The electronic apparatus may include an image processing apparatus, and the external apparatus may include a display apparatus to display an image output from the image processing apparatus.

The image processing apparatus may include a set-top box.

According to another exemplary embodiment, a control method of an electronic apparatus communicating with an external apparatus is provided. The method includes performing a preset operation corresponding to a preset key signal when the preset key signal is received; resetting up an operation corresponding to the first key signal based on a setup signal when the setup signal is received from the external apparatus, the setup signal setting up the operation corresponding to the first key signal, which is the first operation, to be replaced by a second operation different from the first operation; and performing the second operation based on a result of the reset up when the first key signal is received.

The performing of the second operation based on the result of the reset up when the first key signal is received may include generating a user interface (UI) image including information indicating a setup change with respect to the first key signal and outputting the UI image to the external apparatus.

The generating and outputting of the UI image to the external apparatus may include generating the UI image by replacing a first object corresponding to the first operation by a second object corresponding to the second operation.

The setup signal may include address information where an image of the second object is stored, and the generating and outputting of the UI image to the external apparatus may include receiving the image of the second object stored in the address information from a server connected via a network.

The resetting up of the operation corresponding to the first key signal based on the setup signal may include changing a setup of mapping with respect to the first key signal to the second operation based on the setup signal, a operation corresponding to each key signal being mapped.

According to another exemplary embodiment, the external apparatus may include a communication unit configured to communicate with the electronic apparatus, a user input unit which generates a preset key signal; and a controller which transmits a setup signal through the communication unit, the setup signal resetting up a first operation performed by the electronic apparatus corresponding to a first key signal through the user input unit, to be replaced by a second operation different from the first operation, and transmits the first key signal through the communication unit so that the electronic apparatus performs the second operation based on a result of the reset up.

The external apparatus may further include an image receiver which receives a user interface (UI) image from the electronic apparatus, and the controller may control the UI image to be displayed on the display unit, the UI image being received by the image receiver based on a result of the reset up and including information indicating a setup change with respect to the first key signal.

The UI image may be generated by replacing a first object corresponding to the first operation by a second object corresponding to the second operation.

The setup signal may include address information where an image of the second object is stored so that the electronic apparatus receives the image of the second object from a server.

The controller may transmit the first key signal through the communication unit when the second object is selected in the UI image through the user input unit.

The user input unit may include a first key to select the first object, and the second object is selected through the first key when the first object is replaced by the second object.

The user input unit may include a remote controller.

The electronic apparatus may include an image processing apparatus, and the external apparatus may include a display apparatus to display an image output from the image processing apparatus.

According to another exemplary embodiment, a control method of an external apparatus of an electronic apparatus is provided. The method includes transmitting a setup signal to the electronic apparatus, the setup signal resetting up an operation performed by the electronic apparatus corresponding to a first key signal through a user input unit of the external apparatus, which is a first operation, to be replaced by a second operation different from the first operation; and transmitting the first key signal through the user input unit to the electronic apparatus so that the electronic apparatus performs the second operation based on a result of the reset up.

The transmitting the first key signal through the user input unit to the electronic apparatus so that the electronic apparatus performs the second operation based on the result of the reset up may include displaying a user interface (UI) image being transmitted from the electronic apparatus based on a result of the reset up and including information indicating a setup change with respect to the first key signal.

The UI image may be generated by replacing a first object corresponding to the first operation by a second object corresponding to the second operation.

The setup signal may include address information where an image of the second object is stored so that the electronic apparatus receives the image of the second object from a server.

The displaying the UI image may further include transmitting the first key signal to the electronic apparatus when the second object is selected in the UI image through the user input unit.

### BRIEF DESCRIPTION OF THE DRAWINGS

The above and/or other aspects will become apparent from the following description of the exemplary embodiments, taken in conjunction with the accompanying drawings, in which:
FIG. 1 illustrates an example of a display system according to an exemplary embodiment;
FIG. 2 is a block diagram of the exemplary display system of FIG. 1;
FIG. 3 illustrates an example of signal transmission and reception between an image processing apparatus and a display apparatus in the exemplary display system of FIG. 1;
FIG. 4 illustrates an example of a user interface (UI) image including a first object displayed in the exemplary display apparatus of FIG. 1;
FIG. 5 illustrates an example of a UI image where a first object is replaced by a second object displayed in the exemplary display apparatus of FIG. 1;
FIG. 6 is a flowchart illustrating an exemplary control method of the image processing apparatus in the display system of FIG. 1; and
FIG. 7 is a flowchart illustrating an exemplary control method of the display apparatus in the display system of FIG. 1.

### DETAILED DESCRIPTION OF EXEMPLARY EMBODIMENTS

Exemplary embodiments will be described in detail with reference to accompanying drawings so as to be realized by a person having ordinary knowledge in the art. The exemplary embodiments may be embodied in various forms without being limited to the exemplary embodiments set forth herein. Descriptions of well-known parts are omitted for clarity and conciseness, and like reference numerals refer to like elements throughout.

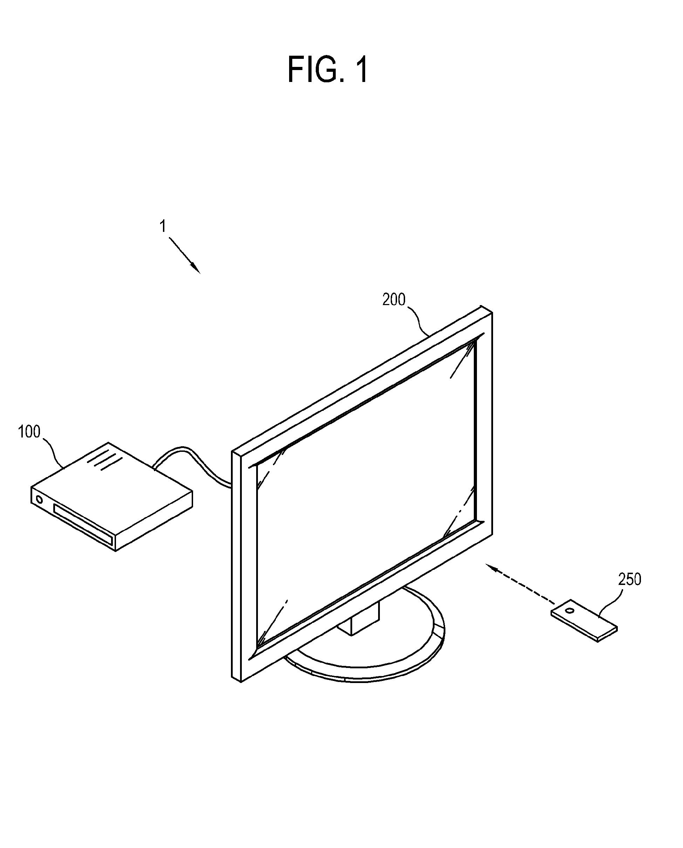

FIG. 1 illustrates an example of a display system 1 according to an exemplary embodiment. The display system 1 includes an image processing apparatus 100 configured to process an image signal based on a process (e.g., preset) to generate an output, and a display apparatus 200 configured to display an image signal output from the image processing apparatus 100 as an image.

The exemplary embodiment is configured to include the image processing apparatus 100 configured as a set-top box (STB) and the display apparatus 200 configured as a TV connected locally to the STB. However, the exemplary embodiment is not limited thereto, and may be applied to a home network including various electronic devices or home appliances, or in any other scheme as would be understood by those skilled in the art. The display system 1 having the above configuration is only an illustrative example.

The image processing apparatus 100 may be configured as a DVD player, a Blu-ray disc player, a video tape recorder, a main computer, or the like in addition to the STB. Further, the display apparatus 200 may be configured as a computer monitor, a portable media player, or the like in addition to the TV. However, other structures that perform the function of image processing as known by those skilled in the art may be substituted therefor.

The image processing apparatus 100 may be connected to the display apparatus 200 locally or via a wire-based/wireless network. A plurality of image processing apparatuses 100 may be connected to a plurality of display apparatuses 200. Also at least one additional image processing apparatus may be connected between the image processing apparatus 100 and the display apparatus 200.

In addition to image signals, the image processing apparatus 100 generates user interface (UI) image data to select various operations (e.g., preset) of the image processing apparatus 100, and outputs the data to the display apparatus 200. The display apparatus 200 displays a UI image based on the UI image data.

A UI image displayed in the display apparatus 200 includes at least one object. The object denotes an image element (e.g., preset) having various shapes and sizes. Each object may be set up corresponding to various operations of the image processing apparatus 100 or the display apparatus 200.

A user may select any one object in a UI image through a remote controller 250 provided with the display apparatus 200. Various methods of selecting an object may be used, and the user moves a cursor/pointer through manipulation of direction keys (e.g., four) of the remote controller 250 and makes a selection through manipulation of a selection key.

Alternatively, when a key in the remote controller 250 is set up as a hot key to select a corresponding object, the object may be selected through one-touch manipulation of the key.

When an object is selected from a UI image, an operation corresponding to the selected object is performed. When the operation is performable by the display apparatus 200, the display apparatus 200 performs the operation. Alternatively, when the operation is performed by the image processing apparatus 100, a key signal of the operation is transmitted to the image processing apparatus 100 through a communication channel between the display apparatus 200 and the image processing apparatus 100. Accordingly, the image processing apparatus 100 performs the operation corresponding to the received key signal.

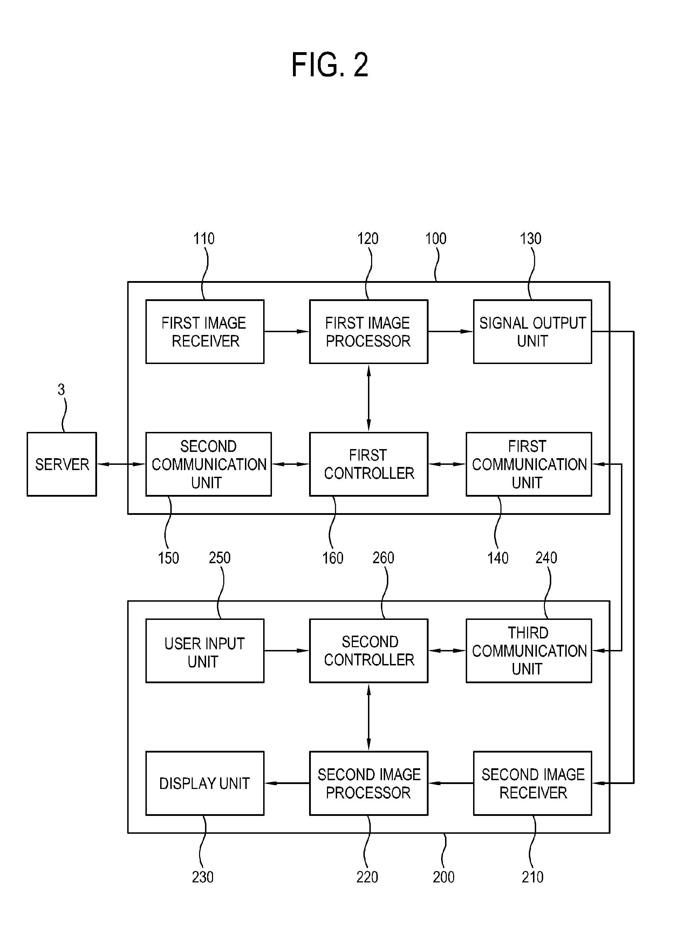

FIG. 2 is a block diagram of the image processing apparatus 100 and the display apparatus 200. The image processing apparatus 100 includes a first image receiver 110 configured to receive an image signal from the outside, a first image processor 120 configured to process an image signal received by the first image receiver 110, a signal output unit 130 configured to output an image signal processed by the first image processor 120, a first communication unit 140 configured to communicate with the display apparatus 200, a second communication unit 150 configured to communicate with a server 3 via a network, and a first controller 160 to control image processing operations of the first image processor 120 and to respectively transmit and receive data/signals to and from the display apparatus 200 and the server 3.

The first image receiver 110 receives an image signal to transmit to the first image processor 120 and may be configured in various types corresponding to a standard of the received image signal and a type of the image processing apparatus 100. For example but not by way of limitation, the first image receiver 110 may receive a radio frequency (RF) signal transmitted from a broadcasting station (not shown) wirelessly or receives image signals in composite video, component video, super video, SCART (Syndicat des Constructeurs d'Appareils Radiorécepteurs et Téléviseurs, Radio and Television Receiver Manufacturers' Association), and high definition multimedia interface (HDMI) standards.

The first image processor 120 performs various types of image (e.g., preset) processing on an image signal. The first image processor 120 performs image processing to output the image signal to the display apparatus 200 through the signal output unit 130.

The first image processor 120 may perform various types of image processing, for example, decoding and encoding corresponding to various image formats, de-interlacing, frame refresh rate conversion, noise reduction to improve image quality, detail enhancement, and the like. However, the image processing performed by the first image processor 120 is not limited thereto. The first image processor 120 may be provided as a separate component to independently conduct each process, or an integrated component which is multi-functional.

Further, an event occurs, for example, when a request is made from the display apparatus 200, the first image processor 120 generates UI image (e.g., preset) data including at least one selectable object and outputs the data through the signal output unit 130.

The signal output unit 130 is connected to the display apparatus 200 wireline or wirelessly, and transmits an image signal processed by the first image processor 120 or UI image data to the display apparatus 200. The signal output unit 130 may be configured in various types based on a standard of an output image signal and connection to the display apparatus 200, and may transmit an image signal based on HDMI, DisplayPort, unified display interface (UDI), and wireless HD standards, or the like, but is not limited thereto.

The first communication unit 140 is connected to the display apparatus 200 to enable wire-based/wireless communication and is provided so that the first controller 160 transmits and receives data/information/signals to and from the display apparatus 200. The first communication unit 140 may perform the data transmission and reception based on various channel standards, such as an inter-integrated circuit (12C) and a display data channel (DDC), but is not limited thereto.

The second communication unit 150 connects the image processing apparatus 100 to the server 3 via a wireline/wireless network, and is provided so that the first controller 160 accesses the server 3 to transmit and receive data/information/signals.

The first controller 160 maps various operations of the image processing apparatus 100 corresponding to various key (e.g., preset) signals, respectively. When a key signal is received from the display apparatus 200 through the first communication unit 140, the first controller 160 controls all components of the image processing apparatus 100 including the first image processor 120 to perform a mapped operation corresponding to the received key signal.

For example, when a key signal requesting display of a UI image (e.g., preset) is received through the first communication unit 140, the first controller 160 controls the first image processor 120 to generate a UI image and outputs the image through the signal output unit 130. Further, when a key signal corresponding to an object in the UI image is received through the first communication unit 140, the first controller 160 controls an operation set up corresponding to the received key signal to be performed.

The display apparatus 200 includes a second image receiver 210 to receive an image signal output from the image processing apparatus 100, a second image processor 220 to process an image signal received by the second image receiver 210, a display unit 230 to display an image signal processed by the second image processor 220 as an image, a third communication unit 240 to perform data communication with the image processing apparatus 100, a user input unit 250 manipulated by a user, and a second controller 260 to control the second image processor 220 corresponding to manipulation of the user input unit 250 or to transmit a key signal corresponding to the manipulation to the image processing apparatus 100 through the third communication unit 240.

The second image receiver 210 receives an image signal output from the signal output unit 130 and transmits the signal to the second image processor 220. The second image receiver 210 is provided in a standard corresponding to the signal output unit 130.

The second image processor 220 performs various types of image (e.g., preset) processing on an image signal received by the second image receiver 210 and outputs the signal to the display unit 230 to be displayed as an image. The second image processor 220 may perform various types of image processing, for example but not limited to, scaling, line scanning, or the like. Processes performed by the second image processor 220 may be the same as or different from processes performed by the first image processor 120.

The display unit 230 displays an image signal processed by the second image processor 220 as an image and may be configured in various types, such as a liquid crystal display (LCD), a plasma display panel (PDP), an organic light emitting diode (OLED), a field emission display (FED), an electro luminescence display (ELD), or the like. However, the display unit 230 is not limited thereto, and other types as understood by those skilled in the art may be substituted therefor.

The third communication unit 240 connects the second controller 260 to the first controller 160 of the image processing apparatus 100 to enable communication so that the second controller 260 transmits and receives data/information/ signals to and from the first controller 160. The third communication unit 240 is configured corresponding to a standard of the first communication unit 140, such as an 12C and a DDC.

The user input unit 250 generates a key signal (e.g., preset) corresponding to manipulation of the user, and transmits the generated key signal to the second controller 260. The user input unit 250 includes various keys or buttons, or other structures configured to permit a user to enter an input, generates a control signal corresponding to a key by manipulation of the user, and transmits the control signal to the second controller 260.

The user input unit 250 is configured as a remote controller and transmits a key signal corresponding to manipulation of the user wirelessly through infrared rays, RF communication, Zigbee communication, or the like. However, the user input unit 250 is not limited thereto, but may be configured in various types such as a menu key installed on an outside of the display apparatus 200.

When a first object is selected from a UI image displayed on the display unit 230 through the user input unit 250, the second controller 260 transmits a first key signal reporting about the selection of the first object through the third communication unit 240. Accordingly, the image processing apparatus 100 receiving the first key signal performs a first operation set up corresponding to the first object. Here, the terms "first object," "first key signal," and "first operation" are only used for convenience of describing particular exemplary embodiments.

For example, the first object in a UI image is displayed on the display unit 230, and the first key of the user input unit 250 is set up to select the first object. In this instance, the user presses or selects the first key of the user input unit 250 to select the first object. The second controller 260 transmits the first key signal generated by the selection of the first object to the image processing apparatus 100.

Since the user input unit 250 is provided corresponding to the display apparatus 200, the user input unit 250 may not include keys to control all operations of the image processing apparatus 100. For example, when a second operation performable by the image processing apparatus 100 and different from the first operation is controlled through the user input unit 250, a hot key, such as the first key corresponding to the first object, may not provided in the user input unit 250.

More specifically, in the display system 1 or a network system, such as a home network, a remote user interface (RUI) protocol is applied.

The RUI protocol is used to transfer data, such as digital media contents, between two devices connected through a universal plug and play (UPnP) based home network, that is, an RUI client and an RUI server. For example, the RUI client requests RUI information from the RUI server through the RUI protocol, and performs an operation corresponding to the RUI information when the RUI information is received. The display apparatus 200 corresponds to the RUI client, and the image processing apparatus 100 corresponds to the RUI server.

The RUI client and the RUI server individually include remote controllers, and the user manipulates one of the remote controllers to control an operation of the RUI client or the RUI server. However, only one of the remote controllers to control all operations of both the RUI client and the RUI server may be used, instead of using both of the remote controllers to respectively control an operation of the RUI client and an operation of the RUI server. For example, all operations of the display apparatus 200 and the image processing apparatus 100 may be controlled by the remote controller of the display apparatus 200.

The RUI client and the RUI server have different functions, and thus the respective remote controllers have different keys/buttons structures. The user desires to control a function of the RUI server through the remote controller of the RUI client, but the remote controller of the RUI client may not include keys/buttons corresponding to the function of the RUI server. In this instance, since the remote controller does not have a key to perform the function of the RUI server, the user may not be able to perform the function of the RUI server using the remote controller.

When the related art remote controller of the RUI client does not include a key/button structure corresponding to a function of the RUI server, the user uses the remote controller of the RUI server to perform the function. Related art remote controllers are provided respectively depending on a function desired by the user.

In the exemplary embodiment, the display apparatus 200 transmits a setup signal to the image processing apparatus 100, the setup signal setting up the second operation to be performed instead of the first operation corresponding to the first key signal. The image processing apparatus 100 changes a setup of an operation corresponding to the first key signal to the second operation based on the setup signal, and outputs a UI image including information indicating a setup change with respect to the first key signal to the display apparatus 200, so that the UI image is displayed in the display apparatus 200. When the first key signal is received from the display apparatus 200, the image processing apparatus 100 performs the second operation, instead of the first operation, based on the changed setup.

Accordingly, the user may replaceably perform various operations of the image processing apparatus 100 through the user input unit 250 of the display apparatus 200. When the first operation is set up in a hot key as the first key of the user input unit 250, in the exemplary embodiment, the second operation is performed through one-touch manipulation of the first key, instead of the first operation.

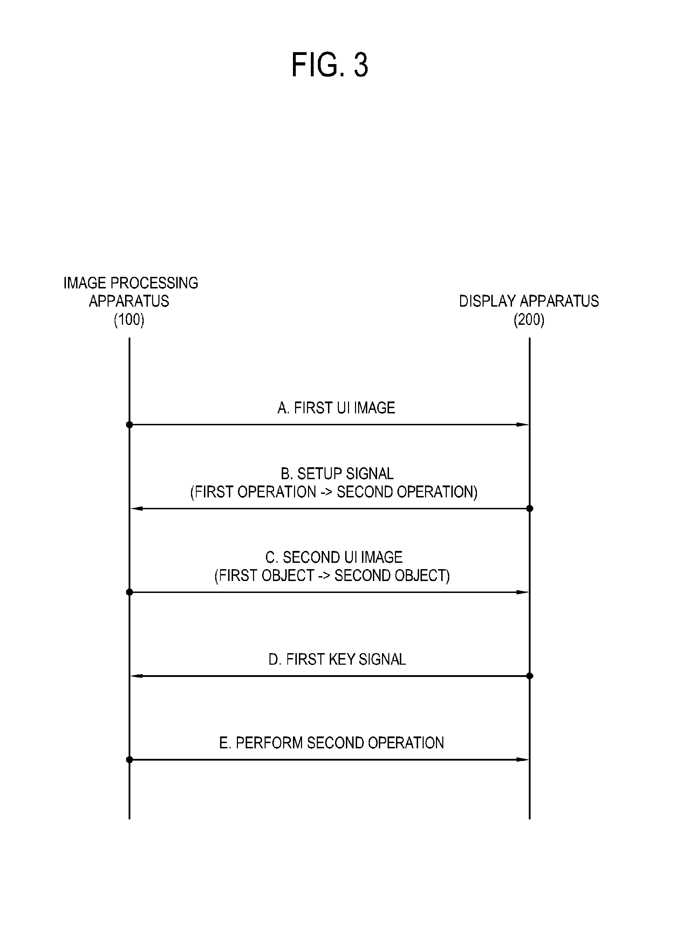

FIG. 3 illustrates an example of a signal transmission and reception process, between the image processing apparatus 100 and the display apparatus 200. The image processing apparatus 100 generates a first UI image including a first object and outputs the image to the display apparatus 200 in operation A. The display apparatus 200 displays the first UI image output from the image processing apparatus 100.

The display apparatus 200 transmits a setup signal replacing a first operation with a second operation to the image processing apparatus 100 in operation B. Generation and transmission of the setup signal may be set up by the user through the user input unit 250. However, the generation and transmission of the setup signal is not limited thereto, but may be performed by various processes.

When the setup signal is received, the image processing apparatus 100 changes a setup of an operation corresponding to the first key signal from the first operation to the second operation based on the setup signal. The image processing apparatus 100 generates a second UI image where a first object corresponding to the first operation is replaced by a second object corresponding to the second operation in the first UI image, and outputs the second UI image to the display apparatus 200 in operation C. The display apparatus 200 displays the second UI image output from the image processing apparatus 100.

When the user selects the second object in the second UI image through the user input unit 250, the display apparatus 200 transmits the first key signal to the image processing apparatus 100 in the substantially same manner with respect to the first object in operation D. That is, the display apparatus 200 transmits the same first key signal to the image processing apparatus 100 both when the first object is selected and when the second object is selected in the UI image.

When the first key signal is received from the display apparatus 200, in operation E, the image processing apparatus 100 performs the second operation instead of the first operation based on the changed setup corresponding to operation B.

According to the above exemplary process, when the user input unit 250 of the display apparatus 200 does not include an interface to perform the second operation of the image processing apparatus 100, an interface to perform the first operation in the user input unit 250 may be set up to replaceably perform the second operation. Accordingly, the user may control the second operation to be performed through the user input unit 250.

Further, the UI image including information indicating the replaceable setup is displayed, so that the user may identify that a corresponding interface of the user input unit 250 is changed for the second operation.

In the exemplary embodiment, operation B follows operation A, which is an illustrative example. However, operation A may not be performed.

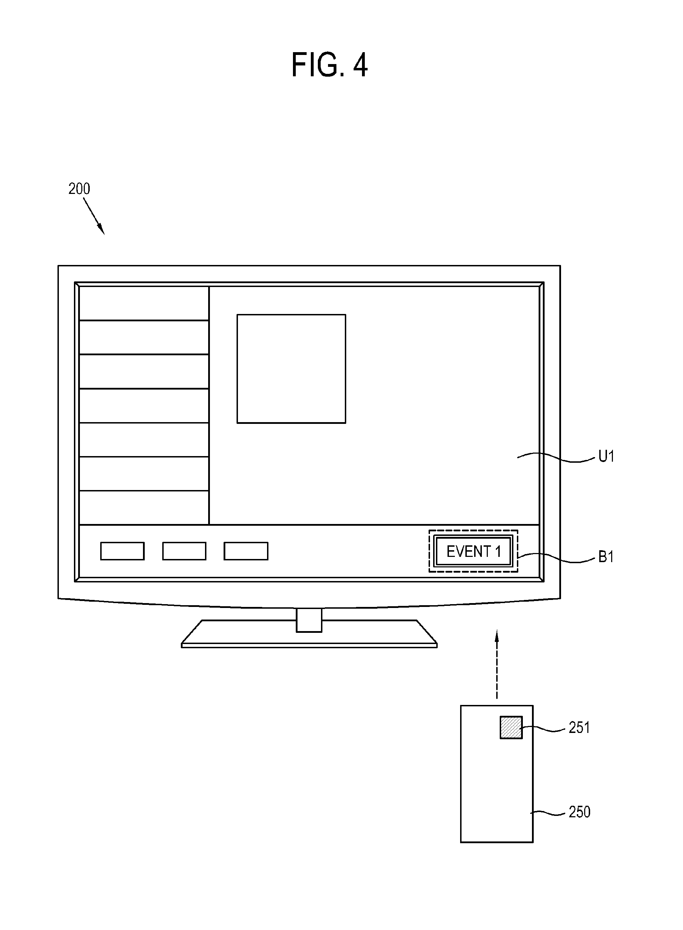

FIG. 4 illustrates an example of a first UI image U1 displayed in the exemplary display apparatus 200. The display apparatus 200 displays the first UI image U1 including various objects configured as bitmap images. At least part of the objects may be selectable. The objects correspond to various operations/events performed by the image processing apparatus 100. An operation corresponding to an object is performed when the object is selected.

The user input unit 250 is configured as a remote controller and includes a first key 251 (e.g., preset). The first UI image U1 includes a first object B1, and the first object B1 is selected when the user selects the first key 251.

When the first object B1 is selected, a first key signal is transmitted from the display apparatus 200 to the image processing apparatus, and the image processing apparatus 100 performs a first operation corresponding to the first key signal based on the reception of the first key signal.

When the display apparatus 200 transmits a setup signal changing an operation corresponding to the first key signal from the first operation to a second operation, the image processing apparatus 100 changes a setup based on the setup signal.

The setup signal may include, for example, identification (ID) information about the first operation and the second operation and address information about the server 3 where an image of a second object B2 corresponding to the second operation is stored, but is not limited thereto. The image processing apparatus 100 changes a setup of mapping with respect to the first key signal to the second operation and downloads the second object B2 from the server 3 based on the address information.

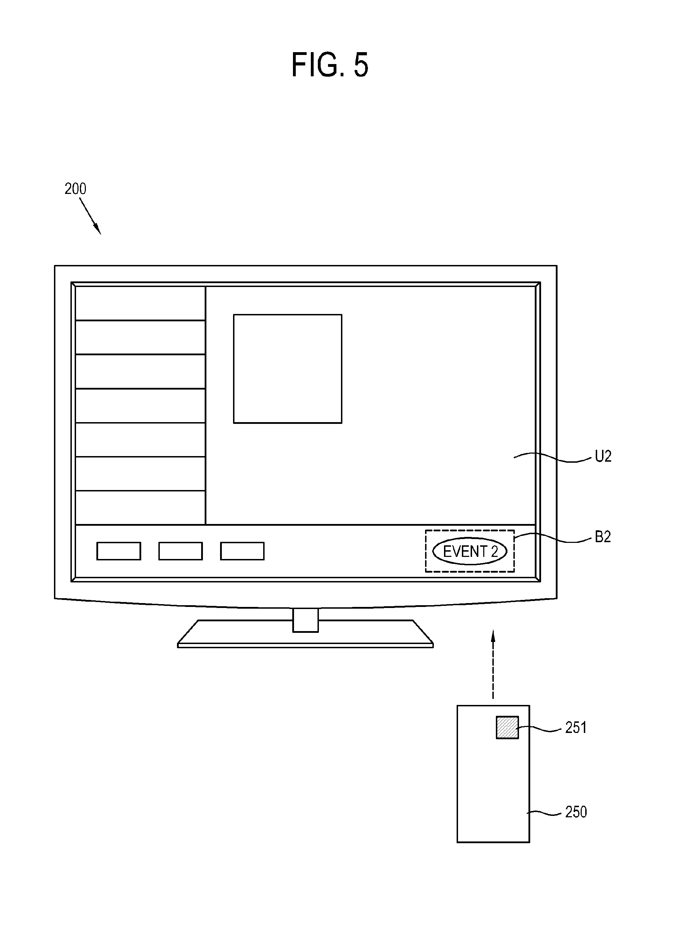

The image processing apparatus 100 generates and outputs a second UI image U2 where the first object B1 is replaced by the second object B2 in the first UI image U1, and the display apparatus 200 displays the second UI image U2, as shown in FIG. 5.

FIG. 5 illustrates an example of the second UI image U2. The second UI image U2 includes the second object B2 instead of the first object B1 of FIG. 4. Since the second object B2 is a different image from the first object B1, the user may identify that the operation corresponding to the first key 251 is changed.

When the user manipulates the first key 251, the second object B2 is selected in the second UI image U2. Accordingly, the display apparatus 200 transmits the same key signal to the image processing apparatus 100 as when the first object B1 is selected. Subsequent operations of the image processing apparatus 100 are substantially the same as described above.

In the above exemplary embodiment, the image processing apparatus 100 downloads the image of the second object B2 from the server 3, but the above configuration is an illustrative example and is not limited thereto. For example, the image processing apparatus 100 itself may store the image of the second object B2 or generate the image based on a preset algorithm.

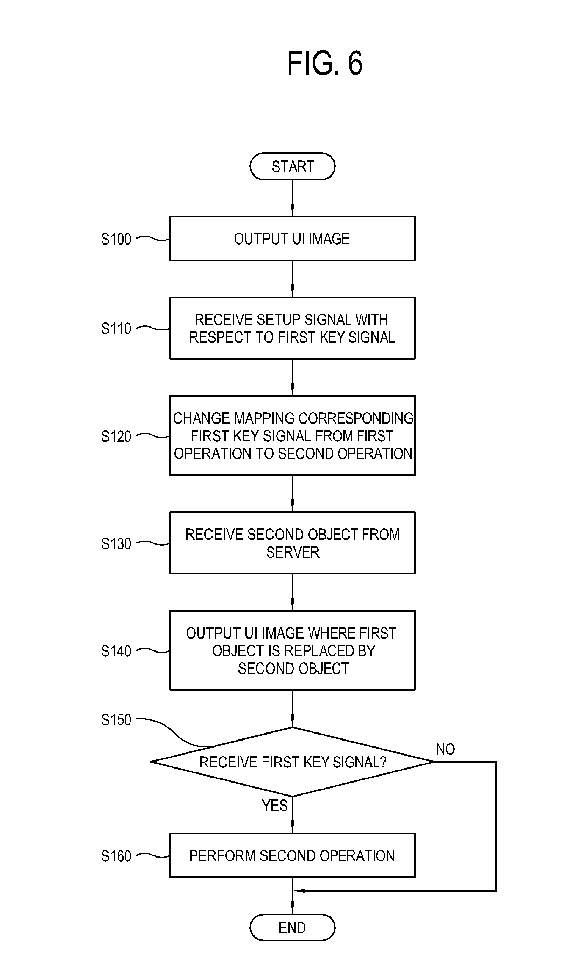

Hereinafter, an exemplary control method of the image processing apparatus 100 is described with reference to the flowchart of FIG. 6.

The first controller 160 outputs a UI image to the display apparatus 200 (S100). When a setup signal requesting a setup change with respect to a first key signal is received from the display apparatus 200 (S110), the first controller 160 changes a set up of preset mapping corresponding to the first key signal from a first operation to a second operation (S120).

The first controller 160 receives an image of a second object from the server 3 based on address information included in the setup signal (S130). The first controller 160 generates a UI image where a first object is replaced by the second object using the received image of the second object and outputs the UI image to the display apparatus 200 (S140).

Then, when the first key signal is received (S150), the first controller 160 performs the second operation based on the setup change in operation S120 (S160).

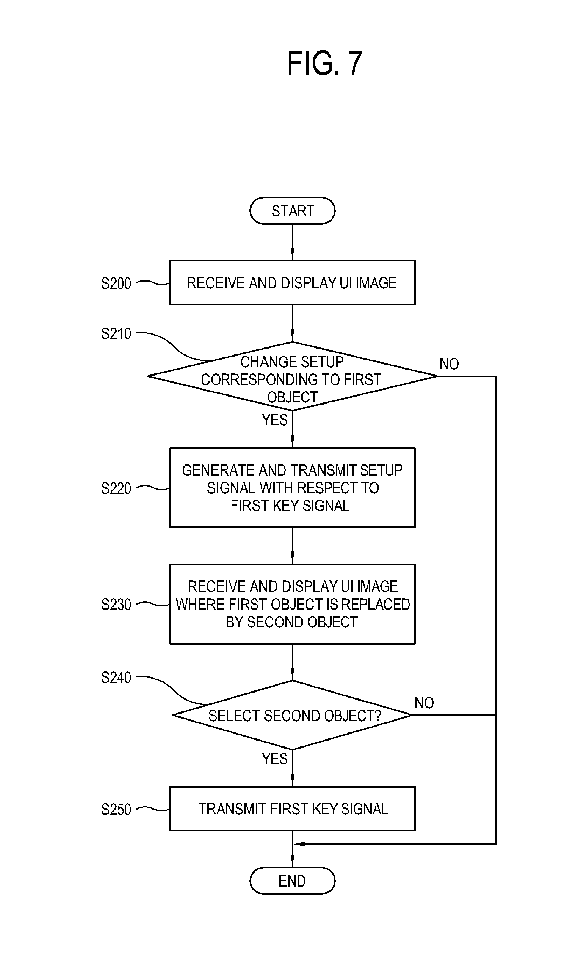

Hereinafter, an exemplary control method of the display apparatus 200 is described with reference to the flowchart of FIG. 7. The second controller 260 controls a UI image received from the image processing apparatus 100 to be displayed (S200). When there occurs an event changing a setup corresponding to a first object in the UI image by manipulation through the user input unit 250 (S210), the second controller 260 generates a setup signal changing a setup with respect to a first key signal and transmits the setup signal to the image processing apparatus (S220).

When a UI image where the first object is replaced by a second object based on the setup signal is newly received from the image processing apparatus 100, the second controller 260 controls the newly received UI image to be displayed (S230).

When the second object B2 is selected through the user input unit 250 (S240), the second controller 260 transmits the first key signal to the image processing apparatus 100 (S250). Accordingly, the image processing apparatus 100 performs the second operation instead of the first operation.

The above-described embodiments can also be embodied as computer readable codes which are stored on a computer readable recording medium (for example, non-transitory, or transitory) and executed by a computer or processor. The computer readable recording medium is any data storage device that can store data which can be thereafter read by a computer system, including the video apparatus.

Examples of the computer readable recording medium include read-only memory (ROM), random-access memory (RAM), CD-ROMs, magnetic tapes, floppy disks, optical data storage devices, and carrier waves such as data transmission through the Internet. The computer readable recording medium can also be distributed over network coupled computer systems so that the computer readable code is stored and executed in a distributed fashion. Also, functional programs, codes, and code segments for accomplishing the embodiments can be easily construed by programmers skilled in the art to which the disclosure pertains. It will be understood that various modifications may be made. For example, suitable results may be achieved if the described techniques are performed in a different order and/or if components in a described system, architecture, device, or circuit are combined in a different manner and/or replaced or supplemented by other components or their equivalents.

Although a few exemplary embodiments have been shown and described, it will be appreciated by those skilled in the art that changes may be made in these exemplary embodiments without departing from the principles and spirit of the inventive concept, the scope of which is defined in the appended claims and their equivalents. For example, the above embodiments are described with a TV as an illustrative example, but the display apparatus of the embodiments may be configured as a smart phone, a mobile phone, and the like.

## Claims

1. An electronic apparatus comprising:
a communication unit which communicates with an external apparatus; and
a controller which performs a preset operation corresponding to a preset key signal received through the communication unit, receives a setup signal through the communication unit to reset up an operation corresponding to a first key signal, and performs a second operation based on a result of the reset up when the first key signal is received through the communication unit, the setup signal setting up the first operation corresponding to the first key signal to be replaced by the second operation different from the first operation.

2. The electronic apparatus of claim 1, further comprising a signal output unit which outputs a user interface (UI) image to be displayed in the external apparatus, wherein the controller outputs the UI image including information indicating a setup change with respect to the first key signal through the signal output unit based on a result of the reset up.

3. The electronic apparatus of claim 2, wherein the controller generates the UI image by replacing a first object corresponding to the first operation by a second object corresponding to the second operation.

4. The electronic apparatus of claim 3, wherein the setup signal comprises address information where an image of the second object is stored, and the controller receives the image of the second object stored in the address information from a server connected via a network.

5. The electronic apparatus of claim 1, wherein the controller changes a setup of mapping with respect to the first key signal to the second operation based on the setup signal, the preset operation corresponding to a key signal being mapped.

6. The electronic apparatus of claim 1, wherein the electronic apparatus comprises an image processing apparatus, and the external apparatus comprises a display apparatus to display an image output from the image processing apparatus.

7. An external apparatus of an electronic apparatus, the external apparatus comprising:
a communication unit which communicates with the electronic apparatus;
a user input unit which generates a preset key signal; and
a controller which transmits a setup signal through the communication unit, the setup signal resetting up a first operation performed by the electronic apparatus corresponding to a first key signal through the user input unit, to be replaced by a second operation different from the first operation, and transmits the first key signal through the communication unit so that the electronic apparatus performs the second operation based on a result of the reset up.

8. The external apparatus of claim 7, further comprising an image receiver which receives a user interface (UI) image from the electronic apparatus, wherein the controller controls the UI image to be displayed on the display unit, the UI image being received by the image receiver based on a result of the reset up and comprising information indicating a setup change with respect to the first key signal.

9. The external apparatus of claim 8, wherein the UI image is generated by replacing a first object corresponding to the first operation by a second object corresponding to the second operation.

10. The external apparatus of claim 9, wherein the setup signal comprises address information where an image of the second object is stored so that the electronic apparatus receives the image of the second object from a server.

11. The external apparatus of claim 9, wherein the controller transmits the first key signal through the communication unit when the second object is selected in the UI image through the user input unit.

12. The external apparatus of claim 9, wherein the user input unit comprises a first key to select the first object, and the second object is selected through the first key when the first object is replaced by the second object.

13. The external apparatus of claim 7, wherein the user input unit comprises a remote controller.

14. A control method of an electronic apparatus communicating with an external apparatus, the method comprising:
performing a first operation corresponding to a preset first key signal when the first key signal is received;
resetting up an operation corresponding to the first key signal based on a setup signal when the setup signal is received from the external apparatus, the setup signal setting up the operation corresponding to the first key signal, which is the first operation, to be replaced by a second operation different from the first operation; and
performing the second operation based on a result of the reset up when the first key signal is received.

15. A control method of an external apparatus of an electronic apparatus, the method comprising:
transmitting a setup signal to the electronic apparatus, the set up signal resetting up an operation performed by the electronic apparatus corresponding to a first key signal through a user input unit of the external apparatus, which is a preset first operation, to be replaced by a second operation different from the first operation; and
transmitting the first key signal through the user input unit to the electronic apparatus so that the electronic apparatus performs the second operation based on a result of the reset up.
